# EUROPEAN PATENT APPLICATION

(11) **EP 2 348 673 A1**
(43) Date of publication of application: **27.07.2011**
(21) Application number: 08800618.4
(22) Date of filing: 19.09.2008
(51) Int. Cl.: H04L 12/24

(54) **A METHOD AND DEVICE FOR PROVIDING THE CONTROLLING AUTHORITY OF MONOPOLIZING THE SERVICE TO THE WIRELESS ACCESS USER**

(71) Applicant: Alcatel Lucent, 75008 Paris (FR)
(72) Inventor: WANG, Nan, Shanghai 201206 (CN); WAN, Zhikun, Shanghai 201206 (CN)
(74) Representative: MERH-IP Matias Erny Reichl Hoffmann
(86) International application number: PCT/CN2008/001625
(87) International publication number: WO 2010/031204

(57) **Abstract**

A method and device are provided in the present invention, for providing the exclusive service control right of to the wireless access user. Wherein, the network device provides a plurality of format template information of the user terminals for requesting the service control right, and particularly for requesting the service control right of the video collecting device in wireless video surveillance system. Preferably, the template information is edited with the OMA interactive media file, and the user terminal generates an interactive command according to command format information that is corresponding to the user terminal, and sends to the network device, so as to request for service control right. The network device processes the interactive command received from different user terminals, so as to provide the user terminal with service control right. With the present invention, the user terminal can easily and promptly edit the interactive command so as to request for service control right, and the network device can process the user's interactive commands timely and accurately, so as to determine the affiliation of the exclusive service control right, and enables the user with better experience.

## Description

### FIELD OF THE INVENTION

The present invention relates to communication network, in particular relates to method and device for providing a user terminal with an exclusive service control right in wireless communication network.

### BACKGROUND OF THE INVENTION

With the increasing attention on the security problems, the application of wireless video surveillance system has been widely spreaded. The wireless surveillance system comprises collecting device, management platform and user terminal. Wherein, the collecting device comprises nephoscope including Pan & Tilt and camera, wherein, the camera may rotate, the Pan & Tilt is configured to accommodate the camera, and may guide the camera to move in horizontal or vertical direction; the management platform comprises interactive server at the operator or the Service Provider (SP); the user terminal may control the collecting device and render the collected video information.

So far, the operator and the Service Provider deploy collecting devices in many places, for example, at common facilities with a dense population such as the railway station, museum, plaza; or at places relevant to the national safety such as the bank. With the increasing sense of security, the collecting devices of the wireless video surveillance system are also deployed at the subdistrict, residential building, etc., for better service for the safety of the people and coloring the spiritual civilization of the people.

For market development, providing value-added service, the operator or the Service Provider may open the control right of a part of the collecting devices (e.g. collecting devices in non-sensitive areas that are not relevant to important national security etc.), namely, the operator or the Service Provider may provide a user terminal with the exclusive control right of a part of the collecting device.

For example, the operator or the Service Provider may deploy a plurality of collecting devices at an auction. Thus, the user may auction an article of interest, while not being present at the auction, by obtaining the control right of the collecting device, controlling the collecting device using mobile phone, laptop or Personal Digital Assistants (PDA),etc., and focusing the collecting device on the article of interest. In another scenario, the user determines the time at which he (she) wants to go to the ticket hall of the railway station and buy a ticket heading to a specific direction, by obtaining the control right of the collecting device in the ticket hall of the railway station, and judging the number of people buying the ticket during certain time period. It should be understood by those skilled in the art, the scenarios for the user terminal to apply the control right of the collecting device are not limited thereto.

In the prior art, the user terminals may require the control right of the collecting device in the wireless video system from the server of the corresponding operator or Service Provider, by editing the SMS themselves and sending the SMS. Specifically, the SMS is firstly sent to the SMS service center, and then filtered by the SMS service center according to the destination address, forwarded to the corresponding SMS network / router / switch, and finally arrives the interactive server for processing the interactive information. However, each user device does not transmit the interactive command for requesting the control right according to an uniform template, which leads to the following disadvantages:
i) The server needs to identify the various commands from different users, because the order of each field, the unit of each field of the interactive command input by each user are different. For example, if a field of "Yuan", "RMB", or "¥" is included, it represents that, price has been offered for the service control. This is not good for an accurate and fast response to the user's interactive command;
ii) the probability of the occurrence of user's typing error is higher;
iii) the input operation of the user is more complicated.

### SUMMARY OF THE INVENTION

In order to solve the above mentioned problems existing in the prior art, the present invention proposes that, the network device provide the user terminal with template information of various formats for the user terminal to request the service control right; according to the template information of a message format corresponding to itself, the user terminal generates an interactive command that is in accordance with the corresponding format, and transmits it to the network device, to request the service control right; the network device processes the request command received from different user terminals, so as to provide the user with the service control right.

According to a first aspect of the invention, there is provided a method, in a network device of a wireless communication network, of providing one of one or more user terminals with an exclusive service control right. The method comprises the following steps: transmitting service control right related information and a plurality of command format information to the one or more user terminals; receiving at least one interactive command edited according to each corresponding command format information from at least one of the one or more user terminals; providing one of the at least one user terminal with the exclusive service control right, according to the at least one interactive command.

According to a second aspect of the invention, there is provided a method, of processing interactive command in a user terminal of a communication network, wherein, the method comprises the following steps: obtaining service control right related information and a plurality of command format information from a network device; editing an interactive command according to one of the plurality of command format information that is corresponding to the user terminal; transmitting the interactive command to the network device.

According to a third aspect of the present invention, there is provided a first providing device, in a network apparatus of a wireless communication network, for providing one of one or more user terminals with an exclusive service control right. The first providing device comprises: a transmitter, configured to transmit a service control right related information and a plurality of command format information to the one or more user terminals; a command receiver, configured to receive at least one interactive command edited according to each corresponding command format information from at least one of the one or more user terminals; a second providing means, configured to provide one of the at least one user terminal with the exclusive service control right, according to the at least one interactive command.

According to a fourth aspect of the present invention, there is provided a processing device for processing interactive command in a user terminal of a communication network, wherein, the processing device comprises: a second obtaining means, configured to obtain a service control right related information and a plurality of command format information from a network device; an editing means, configured to edit an interactive command according to one of the plurality of command format information that is corresponding to the user terminal; an interactive command transmitting means, configured to transmit the interactive command to the network device.

The advantages of the invention are as follows:

In the present invention, uniform command format is provided for the user terminal, preferably, the server configures the uniform command format using OMA Interactivity Media Document. After the user who supports OMA protocol obtains the uniform command format, the user terminal can edit the OMA protocol based interactive command according to the uniform command format.

Besides, the user terminal can transmit the OMA protocol based interactive command of SMS type to the interactive server, while there is no need to forward the message via the SMS server center, SMS gateway like the traditional SMS command. Thus the transmission latency of the interactive command is reduced, so that the server which supports OMA protocol may timely receive the interactive command and perform the corresponding process.

Due to that uniform command format is applied; the commands edited by different user terminals are in the same order and have a uniform unit. Thus, it is advantageous for the server to process the user's interactive command accurately and fast.

Furthermore, the user may easily and quickly construct its interactive command, by using the command format configured with the OMA Interactivity Media Document in the present invention. The probability for the occurrence of the typing error of the user is reduced, which will significantly improve the Quality of Experience (QoE) of the user.

Besides, because the server provides the user terminal with command formats based on various protocols, the user may select one therefrom, according to various factors such as its own terminal capacity(e.g. the protocol types it supports) or the user's preference, etc..

Moreover, the server in the wireless video surveillance system may also provide the user with the web link that enables a quick input of the interactive command, or the video clip filmed by the collecting device of the wireless video surveillance system, so that the user may have a better idea of the service control right related information, and easily input the interactive command.

Furthermore, the mobile operator or Service Provider may transmit the service control right related information and the command format information in a broadcasting manner simultaneously to all the users who desire to obtain the service control right. Thus, wireless resource may be saved and the transmission latency of the above message in the wireless communication network can be significantly reduced.

### BRIEF DESCRIPTION OF THE DRAWINGS

By reading the detailed description of the non-restrictive embodiments with reference to the following drawings, other features, objects and advantages of this invention will become apparent.
Fig. 1. shows network topology of one embodiment according to the present invention;
Fig. 2. shows a flow chart of the system method of one embodiment according to the present invention;
Fig. 3. shows a schematic view of the command template configured using OMA Interactivity Media Document;
Fig. 4. shows a block diagram of the device of one embodiment according to the present invention.

Wherein, same or similar reference numerals refer to the same or similar device (module) or step.

### DETAILED DESCRIPTION OF EMBODIMENTS

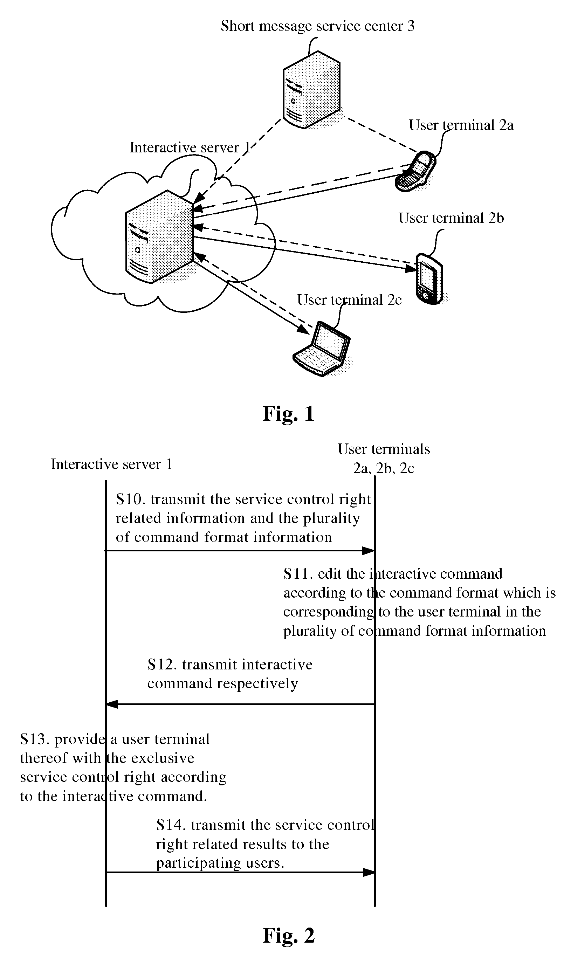

Fig. 1 shows a network topology of one embodiment according to the present invention. In this network, the network device comprises interactive server 1 or service guidance server (not shown in Fig. 1), configured to provide the user terminal with a service control right related information and command format information. The network device further comprises other server implementing the same function, even a host supporting point-to-point function (equals to a shared server), and other network devices, etc.. In this description, the situation, where the network device comprises interactive server 1, is taken as an example, those skilled in the art may understand, the present invention is also applicable for other server or host implementing the same functions. Wherein, the command format information may include template information for editing commands, and it may also include website link that may implement a quick control. The network also comprises user terminal, which is configured to transmit interactive command requesting the service control right to the interactive server 1, so as to obtain the exclusive service control right for the service. The user terminal may be a mobile phone, for example, the user terminal 2a, may also be a Personal Digital Assistants (PDA), for example, the user terminal 2b, may also be a laptop, for example, the user terminal 2c; the user terminal may also include any terminal device supporting wireless network connection such as a desktop. Typically, a plurality of user terminals are comprised in one network, in this embodiment, only user terminals 2a, 2b and 2c are shown for convenience. The above omission does not influence the substantial content of the present invention.

In this embodiment, the situation where the service control right comprises an exclusive control right for the collecting device in the wireless video surveillance system, for example, the exclusive control right for the nephoscope (including Pan & Tilt and camera) is described as an example. In this embodiment, the exclusive control right for the nephoscope has certain authority limitation, for example, there are limitations for the scale of the lens, the rotation angle of the lens, the resolution of the lens, and the range of movement of the Pan & Tilt, namely, the scale of the lens, the rotation angle of the lens, the resolution of the lens, and the range of movement of the Pan & Tilt are adjusted by the control right within the scope limited by the operator and the Service Provider according to the requirement of the user terminal.

In Fig. 1, the solid line with arrow represents the direction of the downlink signal stream, in which the server transmits messages to the user terminal. The dashed line with arrow represents the direction of the uplink signal stream, in which the user terminal transmits signals to the server or other network device. Of course, in this invention, for convenience, the wireless access device (e.g. base station), switch, etc. in the communication link between the server and the user terminal are omitted for ease of description, however the above omission has no influence on the description of the solution in the present invention.

Fig. 2 shows a flow chart of the system method of the present invention.

Referring to Fig. 2 in connection with Fig.1, one embodiment of the present invention is described as follows:

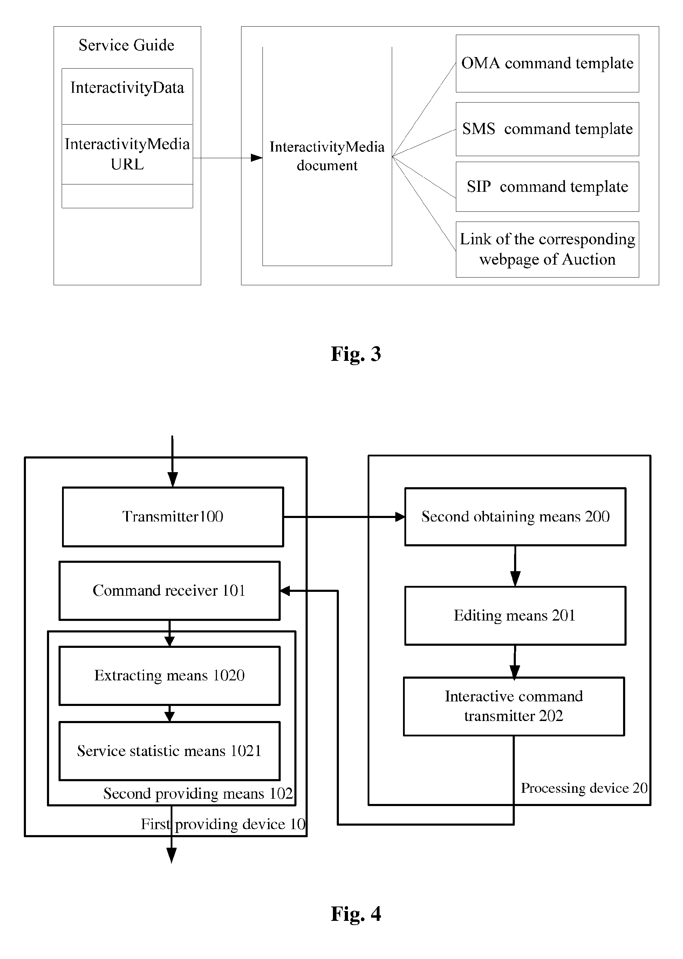

In step S10, the interactive server 1 transmits the service control right related information and a plurality of command format information as data package in a multicast or broadcasting manner to the user terminals 2a, 2b and 2c. Specifically, the service control right related information and the command format information are included in the interactivity data of the service guide shown in Fig. 3.

As illustrated in Fig.3, the service guide may be provided by the interactive server 1, of course, may also be provided by other server. The service guide may guide the user to establish and transmit the interactive command for requesting for the exclusive service control right. The service guide comprises interactivity data and interactivity media URL. The interactivity data may be various information in the wireless video surveillance system, such as the various information related to interactivity between the interactive server 1 and the user terminals 2a, 2b and 2c and the collecting device, for example, the command format information, the service control right related information, etc. in the invention. The interactivity media URL provides the user terminal with various related links, such as, a link to the corresponding interactive server, a short cut website link for participating in the auction of the control right of the video collecting device in the wireless video system. The command template configured using OMA Interactivity Media Document or short cut control site and the link thereto may be stored on the interactive server 1, may also be stored on the other server.

Firstly, the interactive server 1 transmits the service control right related information to the user terminal, so that the user terminal may participate in the auction for the service control right.

The service control right related information and its content are shown in table 1:

**Table 1**

| Content | Example |
|---|---|
| identifier of the service control right | No. 1 camera at People's square Shanghai |
| duration of the service control right | 200809012 2 hours |
| valid time for interacting the service control right related information | 200809012 10:00-11:50 |
| beginning time and ending time of the service control right | 200809012 12:00 14:00 |
| base price of the service control right | 500 yuan |
| current highest price of the service control right | 900 yuan |
| round for interacting the service control right | 3 rounds |
| introduction to the service control right | Video clip filmed by No. 1 camera at People's square Shanghai |
| introduction to the auction method of the service control right | Introductive literal, pictorial or video tutorial for how to participate in the auction |

Wherein, the identifier of the service control right represents the identification of the collecting device whose control right are allowed for auction by the operator or the Service Provider, such as camera, of course, the collecting device is not only limited to the camera, but also includes sound pick up device, alarm, infrared probe, door magnet, smoke sensor, etc.. The identifier of the service control right may further comprise IDs of the other collecting devices whose control right are allowed for auction, namely, the interactive server 1 may provide the user terminal with the control right related information of a plurality of collecting devices that are allowed for auction, for example, 2# infrared probe at the Shanghai railway station. In the following, it is described using the example where the interactive server 1 provides the user terminal with the auction information of the No.1 camera at the people's square Shanghai.

The beginning time and the ending time of the service control right is 200809012 12:00 - 14:00, which represents the exclusive control of the collecting device lasts 2 hours from 12:00, Sep. 12. 2008 to 14:00, Sep. 12. 2008. And the control right of the collecting device in these 2 hours is allowed for auction. Of course, the date Sep. 12. 2008 may be omitted, if the control right of the collecting device is default to be the control right of the collecting device that day.

The duration of the service control right may also be replaced by the beginning time and the ending time of the service control right, for example, the beginning time of the exclusive control right of the collecting device is 12:00, Sep. 12. 2008, and the ending time thereof is 14:00, Sep. 12. 2008 in Table 1.

The valid time for interacting the service control right related information 10:00-11:50 represents that, the auction for the 12:00-14:00 exclusive control right of the No. 1 camera at People's square Shanghai begins at 10:00 and the auction ends at 11:50. The price offered before 10:00 or after 11:50 for the exclusive service control right of the No. 1 camera at People's square Shanghai is considered as invalid, and will be abandoned by the server after arrival.

The round for interacting the service control right represents that, the rounds for eliminating the competitors are 3. It will be further described in the following corresponding part of the description.

The introduction to the service control right comprises the description of the clarity of the lens, scale, rotation angle of the camera, movement range of the camera. It may also be the video clip filmed by the No.1 camera at the people's square Shanghai.

The introduction to the auction method of the service control right comprises the guidance for the user terminal to construct interactive command using command format, to transmit the command to the interactive server or other relevant server etc., or comprises introductive literal, pictorial or video tutorial for how to participate in the auction.

Of course, the contents of the service control right related information are not limited to the contents enumerated above. Furthermore, the contents in table 1 may also be optional and unnecessary. The interactive server 1 may determine which contents therefrom are going to be provided to the user terminal, and which contents may be omitted according to the practical operation condition of the network. For example, if the auction of the control right of the video collecting device in the wireless video surveillance system is of black box mode, wherein one person may offer a price once, the current highest price of the service control right may be omitted. Or, if the base price of the service control right is not defined, contents "base price of the service control right" may also be omitted.

In step S10, the interactive server 10 transmits the plurality of command format information in broadcasting or multicasting manner to each user terminal 2a, 2b and 2c.

Fig. 3 shows a set embedded with a plurality of media objects configured by OMA Interactivity Media Document, comprising: different command template adapted for different terminals, such as OMA command template, SMS command template, SIP command template. The object embedded in the OMA interactivity Media Document may also comprise the short cut link of relevant auction homepage.

Wherein, a plurality of elements are comprised in the OMA command template, and the order of each element and the unit of each element are defined. For example, the price offered, the duration of the service control right, the date, the identifier of the service control right are using the template as _yuan, _:_-_:_, yy/mm/dd, #_camera, and the service control related information comprises the definition of each field in the template and the guidance for the user to construct his own interactive command according to the template. Of course, the command template may further comprises a command that has already been edited as the template, for example, 600yuan, 12:00-14:00, 2008/9/12, Tian An Men #1 camera. It represents that the user has offered 600 yuan for the control right of the Tian An Men square #1 camera 12:00-14:00, Sep.12.2008, while the fields with underline are allowed to be modified by the user terminal according to his requirement.

Other objects may be embedded in the OMA Interactivity Media Document: such as SMS command template, Session Initiation Protocol (SIP) protocol, which are compatible with OMA protocol. Wherein, the SMS command template and the SIP command template are in accordance with the same format as the OMA command template. The following elements are comprised successively: the price offered, the duration of the service control right, the date, the identifier of the service control right. Of course, the above description is merely illustrative and should not be considered as limitation to the command format provided in the present invention.

The above command format may be updated, and may vary according to the specific application scenario.

Furthermore, short cut link to the relevant auction homepage may also be comprised in the OMA Interactivity Media Document. For example, if the operator or the Service Provider uses "www.auction-video.com" as the auction homepage, www.auction-video.com may be filled in the contents field of one media object in the OMA Interactivity Media Document, so as to indicate the user to log in the website for auction activity. Namely, the user may enter the corresponding object and the price for the auction, according to the pull-down menu or input box in the website and according to his will.

And then in Step S11, the user terminals 2a, 2b and 2c may edit the interactive command according to the format which is corresponding to the user terminal in the plurality of command format information. The user terminal firstly parses the identification information of the objects included in the Interactivity Media Document, so as to indicate whether the type of the object is command template based on the OMA protocol or command template based on the SMS, SIP WAP(Wireless Application protocol) etc.. If the user terminal supports a plurality of protocol formats, the user terminal may select the command format based on which he edits his own interactive format considering the following factors:
- The transmission time of the interactive command based on the protocol being shortest, for example, the user terminal 2c supports not only the OMA protocol, but also the SMS protocol. However, due to that the transmission time of the command based on the OMA protocol is the shortest, while the command based on ordinary SMS protocol (not compatible with the OMA format) has longer transmission latency because the message needs to be forwarded by the SMS center server and the SMS gateway / switch / router. The user terminal 2c preferably selects message format based on the OMA protocol which has shorter transmission latency;
- bandwidth resource occupied by the interactive command based on the protocol being least;
- establishing speed of the interactive command based on the protocol being fast; for example the command based on the WAP protocol.
- user's semantics expression of the interactive command based on the protocol being most accurate, not liable to err, for example, the command format information included in the website is intuitive, not liable to cause ambiguity.
- user's operation of the interactive command based on the protocol being simplest, for example the command based on the SMS protocol.

After considering the above factors comprehensively, the user terminal 2a edits the SMS interactive command compatible with OMA: 1100 yuan, 12:00-14:00, 2008/9/12, #1 camera at people's square Shanghai; the user terminal 2b edits the SIP interactive command compatible with OMA: 1050 yuan, 12:00-14:00, 2008/9/12, #1 camera at people's square Shanghai; the user terminal 2c edits OMA interactive command{ 1000 yuan, 12:00-14:00, 2008/9/12, #1 camera at people's square Shanghai}.

In step S12, the user terminals 2a, 2b and 2c transmit their edited interactive command to the interactive server 1 respectively.

In step S13, when the interactive server 1 obtains the interactive command from the plurality of user terminals, it firstly extracts the price offered by each user terminal from the interactive command, and the interactive server 1 records the time at which the interactive command from each different user terminal arrives at the interactive server 1.

At 11:50 the ending time of the auction, if there is only one highest price, the interactive server 1 provides the control right of the #1 camera at people's square Shanghai 12:00 - 14:00 to the user who is offering the highest price, for example ,the user terminal 2a offering 1100 yuan. Optionally, the interactive server 1 may transmit the result of the auction to the other users who are participating in the auction in a broadcasting manner or a multicasting manner.

At 11:50 the ending time of the auction, if there are a plurality of user terminals offering the same highest price for the control right of the #1 camera at people's square Shanghai 12:00 - 14:00, the interactive server 1 compares the time at which each interactive command comprising the highest price arrived at the interactive server 1, and selects the user terminal corresponding to the interactive command arrived earliest at the interactive server 1 as the winner of the control right of the #1 camera at people's square Shanghai 12:00 - 14:00.

In a variant embodiment, in order to reduce the interaction between the user terminal and the server, eliminating auction method according to the round may be applied. For example, the valid duration for interacting the service control right related information 10:00 - 11:50 may be divided into 3 rounds, for example, the duration of the first round of auction is 10:00 - 10:35, assuming there are 100 users participating in the first round of auction, after the first round of auction, if the strategy for the first round of auction is to eliminate 70% competitors, leaving only 30% buyers, namely only 30 users are allowed to participate in the second round of auction. The interactive server 1 processes the price information in the latest interactive command from each mobile terminal (considering one user terminal may offer price for several times in one round of auction, the user terminal's latest price offer, namely the price offered closest to the ending time of this round of auction, is considered to be the final price offer of the user terminal in this round). The interactive server 1 sorts the final price information of each user terminal, and then in step S 14, the interactive server 1 transmits the service control right related results to the participating users, namely transmits the price offered by the buyer ranking at the 30^{th} place, for example 800 yuan, as price indication information to each user terminal in a broadcasting or a multicasting manner, so as to indicate each user terminal that only those have offered price above 800 yuan may enter the second round of auction, and updates the highest price, namely, updates the highest price to the price offered by the user terminal ranking at the first place, for example 1000 yuan. In the above embodiment, in step S 14, the interactive server 1 needs to broadcast or multicast the price indication information to each mobile terminal, in a variant embodiment, in step S14, the interactive server 1 transmits unicast message to the top 30 buyers, allowing them to get into the next round of auction, and gives them the corresponding authority. The interactive server 1 transmits unicast message to the lower 70 users, not allowing them to get into the next round of auction. In the second round of auction, it is also carried out in this eliminating method, it won't be further described because it is exactly the same as the eliminating method in the first round.

In a variant embodiment, considering backward compatibility, for some low-end user terminal, it may not support the command format information edited based on the OMA Interactivity Media Document. Therefore, after these user terminals receive the command format information edited with the OMA Interactivity Media Document, it may be abandoned because it can't be recognized. Accordingly, optionally, the interactive server 1 broadcasts or multicasts the command format based on SMS protocol and the command format based on SIP protocol to all the user terminals. Wherein, the command format based on SMS protocol and the command format based on SIP protocol have the same format as the command template based on various protocols included in the Interactivity Media Document compatible with OMA.

In another variant embodiment, optionally, before step S10, the method further comprises the following steps: each user terminal transmitting the protocol type supported by the user terminal to the interactive server 1. After the interactive server 1 obtains the protocol type supported by each user terminal, it broadcast the command template of the protocol type supported by the user terminals to all the user terminals. For example, if each user terminal served by the interactive server 1 only supports SIP protocol and SMS protocol, after the interactive server 1 obtained the capability information of the user terminal, the interactive server 1 only needs to provide the user terminals with the command format of the SIP protocol and the SMS protocol supported by the user terminals.

It can be understood that, the service control right in the invention is not limited to the control right of the collecting device in the wireless video surveillance system, it may also include the right to use the banquet room and the equipment therein in certain time period.

Fig. 4 shows a block diagram of the device of one embodiment according to the present invention.

The first providing device 10 shown in Fig. 4 is located in the interactive server 1 shown in Fig. 1. The first providing device 10 comprised a transmitter 100, a command receiver 101 and a second providing means 102. Wherein, the second providing means 102 further comprises an extracting means 1020 and a service statistic means 1021.

The processing device 20 shown in Fig. 4 is located in the user terminal 2a shown in Fig. 1, it may also be in user terminal 2b or 2c. The processing device 20 comprises a second obtaining means 200, an editing means 201 and the interactive command transmitter 202.

Firstly, the transmitter 100 transmits the service control right related information and a plurality of command format information as data package in a multicast or broadcasting manner to the user terminals 2a, 2b and 2c. Specifically, the service control right related information and the command format information are included in the interactivity data of the service guide shown in Fig. 3.

As illustrated in Fig.3, the service guide may be provided by the interactive server 1, of course, it may also be provided by other server. The service guide may guide the user to establish and transmit the interactive command for requesting for the exclusive service control right. The service guide comprises interactivity data and interactivity media URL. The interactivity data may be various information in the wireless video surveillance system, such as the various information related to interactivity between the interactive server 1 and the user terminals 2a, 2b and 2c and the collecting device, for example, the command format information, the service control right related information, etc. in the invention. The interactivity media URL provides the user terminal with various related links, such as, a link to the corresponding interactive server, a short cut website link for participating in the auction of the control right of the video collecting device in the wireless video system. The command template configured using OMA Interactivity Media Document or short cut control site and the link thereto may be stored on the interactive server 1, may also be stored on the other server.

Firstly, the transmitter 100 transmits the service control right related information to the user terminal, so that the user terminal may participate in the auction for the service control right.

The service control right related information and its content are shown in table 2:

**Table 2**

| Content | Example |
|---|---|
| identifier of the service control right | No. 1 camera at People's square Shanghai |
| duration of the service control right | 200809012 2 hours |
| valid time for interacting the service control right related information | 200809012 10:00-11:50 |
| beginning time and ending time of the service control right | 200809012 12:00 14:00 |
| base price of the service control right | 500 yuan |
| current highest price of the service control right | 900 yuan |
| round for interacting the service control right | 3 rounds |
| introduction to the service control right | Video clip filmed by No. 1 camera at People's square Shanghai |
| introduction to the auction method of the service control right | Introductive literal, pictorial or video tutorial for how to participate in the auction |

Wherein, the identifier of the service control right represents the identification of the collecting device whose control right are allowed for auction by the operator or the Service Provider, such as camera, of course, the collecting device is not only limited to the camera, but also includes sound pick up device, alarm, infrared probe, door magnet, smoke sensor, etc.. The identifier of the service control right may further comprise IDs of the other collecting devices whose control right are allowed for auction, namely, the interactive server 1 may provide the user terminal with the control right related information of a plurality of collecting devices that are allowed for auction, for example, 2# infrared probe at the Shanghai railway station. In the following, it is described using the example where the interactive server 1 provides the user terminal with the auction information of the No.1 camera at the people's square Shanghai.

The beginning time and the ending time of the service control right is 200809012 12:00 - 14:00, which represents the exclusive control of the collecting device lasts 2 hours from 12:00, Sep. 12. 2008 to 14:00, Sep. 12. 2008. And the control right of the collecting device in these 2 hours is allowed for auction. Of course, the date Sep. 12. 2008 may be omitted, if the control right of the collecting device is default to be the control right of the collecting device that day.

The duration of the service control right may also be replaced by the beginning time and the ending time of the service control right, for example, the beginning time of the exclusive control right of the collecting device is 12:00, Sep. 12. 2008, and the ending time thereof is 14:00, Sep. 12. 2008 in Table 2.

The valid time for interacting the service control right related information 10:00-11:50 represents that, the auction for the 12:00-14:00 exclusive control right of the No. 1 camera at People's square Shanghai begins at 10:00 and the auction ends at 11:50. The price offered before 10:00 or after 11:50 for the exclusive service control right of the No. 1 camera at People's square Shanghai is considered as invalid, and will be abandoned by the server after arrival.

The round for interacting the service control right represents that, the rounds for eliminating the competitors are 3. It will be further described in the following corresponding part of the description.

The introduction to the service control right comprises the description of the clarity of the lens, scale, rotation angle of the camera, movement range of the camera. It may also be the video clip filmed by the No.1 camera at the people's square Shanghai.

The introduction to the auction method of the service control right comprises the guidance for the user terminal to construct interactive command using command format, to transmit the command to the interactive server or other relevant server etc., or comprises introductive literal, pictorial or video tutorial for how to participate in the auction.

Of course, the contents of the service control right related information are not limited to the contents enumerated above. Furthermore, the contents in table 2 may also be optional and unnecessary. The transmitter 100 may determine which contents therefrom are going to be provided to the user terminal, and which contents may be omitted according to the practical operation condition of the network. For example, if the auction of the control right of the video collecting device in the wireless video surveillance system is of black box mode, wherein one person may offer a price once, the current highest price of the service control right may be omitted. Or, if the base price of the service control right is not defined, contents "base price of the service control right" may also be omitted.

The transmitter 100 transmits the plurality of command format information in broadcasting or multicasting manner to each user terminal 2a, 2b and 2c.

Fig. 3 shows a set embedded with a plurality of media objects configured by OMA Interactivity Media Document, comprising: different command template adapted for different terminals, such as OMA command template, SMS command template, SIP command template. The object embedded in the OMA interactivity Media Document may also comprise the short cut link of relevant auction homepage.

Wherein, a plurality of elements are comprised in the OMA command template, and the order of each element and the unit of each element are defined. For example, the price offered, the duration of the service control right, the date, the identifier of the service control right are using the template as _yuan, _:_-_:_, yy/mm/dd, #_camera, and the service control related information comprises the definition of each field in the template and the guidance for the user to construct his own interactive command according to the template. Of course, the command template may further comprises a command that has already been edited as the template, for example, 600yuan, 12:00-14:00, 2008/9/12, Tian An Men #1 camera. It represents that the user has offered 600 yuan for the control right of the Tian An Men square #1 camera 12:00-14:00, Sep.12.2008, while the fields with underline are allowed to be modified by the user terminal according to his requirement.

Other objects may be embedded in the OMA Interactivity Media Document: such as SMS command template, Session Initiation Protocol (SIP) protocol, which are compatible with OMA protocol. Wherein, the SMS command template and the SIP command template are in accordance with the same format as the OMA command template. The following elements are comprised successively: the price offered, the duration of the service control right, the date, the identifier of the service control right. Of course, the above description is merely illustrative and should not be considered as limitation to the command format provided in the present invention.

The above command format may be updated, and may vary according to the specific application scenario.

Furthermore, short cut link to the relevant auction homepage may also be comprised in the OMA Interactivity Media Document. For example, if the operator or the Service Provider uses "www.auction-video.com" as the auction homepage, www.auction-video.com may be filled in the contents field of one media object in the OMA Interactivity Media Document, so as to indicate the user to log in the website for auction activity. Namely, the user may enter the corresponding object and the price for the auction, according to the pull-down menu or input box in the website and according to his will.

And then each second obtaining means 200 in the user terminals 2a, 2b and 2c obtains the service control right related information and the plurality of command format information from the transmitter 100 respectively.

And then the editing means 201 in the user terminals 2a, 2b and 2c may edit the interactive command respectively according to the format which is corresponding to the user terminal in the plurality of command format information. The user terminal firstly parses the identification information of the objects included in the Interactivity Media Document, so as to indicate whether the type of the object is command template based on the OMA protocol or command template based on the SMS, SIP WAP(Wireless Application protocol) etc.. If the user terminal supports a plurality of protocol formats, the user terminal may select the command format based on which he edits his own interactive format considering the following factors:
- The transmission time of the interactive command based on the protocol being shortest, for example, the user terminal 2c supports not only the OMA protocol, but also the SMS protocol. However, due to that the transmission time of the command based on the OMA protocol is the shortest, while the command based on ordinary SMS protocol (not compatible with the OMA format) has longer transmission latency because the message needs to be forwarded by the SMS center server and the SMS gateway / switch / router. The editing means 201 in the user terminal 2c preferably selects message format based on the OMA protocol which has shorter transmission latency;

- bandwidth resource occupied by the interactive command based on the protocol being least;
- establishing speed of the interactive command based on the protocol being fast; for example the command based on the WAP protocol.
- user's semantics expression of the interactive command based on the protocol being most accurate, not liable to err, for example, the command format information included in the website is intuitive, not liable to cause ambiguity.
- user's operation of the interactive command based on the protocol being simplest, for example the command based on the SMS protocol.

After considering the above factors comprehensively, the editing means 201 in the user terminal 2a edits the SMS interactive command compatible with OMA: 1100 yuan, 12:00-14:00, 2008/9/12, #1 camera at people's square Shanghai; the editing means 201 in the user terminal 2b edits the SIP interactive command compatible with OMA: 1050 yuan, 12:00-14:00, 2008/9/12, #1 camera at people's square Shanghai; the editing means 201 in the user terminal 2c edits OMA interactive command{ 1000 yuan, 12:00-14:00, 2008/9/12, #1 camera at people's square Shanghai}.

Then, the interactive command transmitter 202 in the user terminals 2a, 2b and 2c transmit their edited interactive command to the interactive server 1 respectively.

When the command receiver 101 obtains the interactive command from the plurality of user terminals, the extracting means 1020 firstly extracts the price offered by each user terminal from the interactive command, and the service statistic means 1021 records the time at which the interactive command from each different user terminal arrives at the interactive server 1.

At 11:50 the ending time of the auction, if there is only one highest price, the second providing means 102 provides the control right of the #1 camera at people's square Shanghai 12:00 - 14:00 to the user who is offering the highest price, for example ,the user terminal 2a offering 1100 yuan. And it transmits the result of the auction to the other users who are participating in the auction in a broadcasting manner or a multicasting manner.

At 11:50 the ending time of the auction, if there are a plurality of user terminals offering the same highest price for the control right of the #1 camera at people's square Shanghai 12:00 - 14:00, the service statistic means 1021 compares the time at which each interactive command comprising the highest price arrived at the interactive server 1, and the second providing means 102 selects the user terminal corresponding to the interactive command arrived earliest at the interactive server 1 as the winner of the control right of the #1 camera at people's square Shanghai 12:00 - 14:00.

In a variant embodiment, in order to reduce the interaction between the user terminal and the server, eliminating auction method according to the round may be applied. For example, the valid duration for interacting the service control right related information 10:00 - 11:50 may be divided into 3 rounds, for example, the duration of the first round of auction is 10:00 - 10:35, assuming there are 100 users participating in the first round of auction, after the first round of auction, if the strategy for the first round of auction is to eliminate 70% competitors, leaving only 30% buyers, namely only 30 users are allowed to participate in the second round of auction. The service statistic means 1021 processes the price information in the latest interactive command from each mobile terminal (considering one user terminal may offer price for several times in one round of auction, the second providing means 102 transmits the service control right related results to the participating users, which means the user terminal's latest price offer, namely the price offered closest to the ending time of this round of auction, is considered to be the final price offer of the user terminal in this round). The service statistic means 1021 sorts the final price information of each user terminal, and then the second providing means 102 transmits the price offered by the buyer ranking at the 30^{th} place, for example 800 yuan, as price indication information to each user terminal in a broadcasting or a multicasting manner, so as to indicate each user terminal that only those have offered price above 800 yuan may enter the second round of auction, and updates the highest price, namely, updates the highest price to the price offered by the user terminal ranking at the first place, for example 1000 yuan. In the above embodiment, the second providing means 102 needs to broadcast or multicast the price indication information to each mobile terminal, in a variant embodiment, the second providing means 102 transmits unicast message to the top 30 buyers, allowing them to get into the next round of auction, and gives them the corresponding authority. The second providing means 102 transmits unicast message to the lower 70 users, not allowing them to get into the next round of auction. In the second round of auction, it is also carried out in this eliminating method, it won't be further described because it is exactly the same as the eliminating method in the first round.

In a variant embodiment, considering backward compatibility, for some low-end user terminal, it may not support the command format information edited based on the OMA Interactivity Media Document. Therefore, after these user terminals receive the command format information edited with the OMA Interactivity Media Document, it may be abandoned because it can't be recognized. Accordingly, optionally, the transmitter 100 broadcasts or multicasts the command format based on SMS protocol and the command format based on SIP protocol to all the user terminals. Wherein, the command format based on SMS protocol and the command format based on SIP protocol have the same format as the command template based on various protocols included in the Interactivity Media Document compatible with OMA.

In another variant embodiment, optionally, the first providing device 10 further comprises a first obtaining means (not shown in the figures), configured to obtain the protocol type supported by each user terminals. After the first obtaining means obtains the protocol type supported by each user terminal, the transmitter 100 broadcast the command template information of the protocol types supported by the user terminals to all the user terminals. For example, if each user terminal served by the interactive server 1 only supports SIP protocol and SMS protocol, after the first obtaining means obtained the capability information of the user terminal, the transmitter 100 only needs to provide the user terminals with the command format of the SIP protocol and the SMS protocol supported by the user terminals.

It can be understood that, the service control right in the invention is not limited to the control right of the collecting device in the wireless video surveillance system, it may also include the right to use the banquet room and the equipment therein in certain time period.

The embodiments of the present invention have been described above. However the present invention is not limited to specific system, device or specific protocol. Variations or modifications may be made by those skilled in the art without departing from the scope as defined by the appended claims.

## Claims

1. A method, in a network device of a wireless communication network, of providing one of one or more user terminals with an exclusive service control right, comprising the following steps:
a. transmitting a service control right related information and a plurality command formats information to the one or more user terminals;
b. receiving at least one interactive command edited according to each corresponding command format information from at least one of the one or more user terminals;
c. providing one of the at least one user terminal with the exclusive service control right, according to the at least one interactive command.

2. A method according to claim 1, **characterized in that** the method further comprises the following step before the step a:
i. determining the plurality of command format information to be transmitted.

3. A method according to claim 2, **characterized in that** the one or more user terminals support plurality of protocol types, and the step i further comprises:
determining plurality of command format information to be transmitted corresponding to the plurality of protocol types respectively, according to the plurality of protocol types supported by the one or more user terminals.

4. A method according to claim 3, **characterized in that** the method further comprises the following step before the step i,:
- obtaining the plurality of protocol types supported by the one or more user terminals.

5. A method according to any of claims 1 to 4, wherein the step c further comprises the following steps:
c1. extracting interactive information included in the at least one interactive command, according to the at least one interactive command;
c2. providing one of the at least one user terminal with the service control right, according to the at least one interactive command.

6. A method according to claim 5, **characterized in that** the one or more interactive information comprises a price offered by the one or more user terminals for the service control right;
and the step c2 further comprises:
selecting and providing a user terminal who has offered the highest price for the service control right with service control right, according to the price offered by the one or more user terminals for the service control right.

7. A method according to claim 6, **characterized in that** the network device has respective receiving time for receiving each interactive command from the one or more user terminals, and the step c2 further comprises:
providing a user terminal corresponding to the interactive command received earliest by the network device with the service control right, when a plurality of user terminals have offered the same highest price for the service control right.

8. A method according to any of claims 3 to 7, **characterized in that** the protocol types comprise at least two of the following protocols: Open Mobile Alliance Protocol, Short Message Service Protocol, Session Initiation Protocol, Wireless Application Protocol, Hyper Text Transfer Protocol or Real-time Transport Protocol.

9. A method according to any of claims 1 to 8, **characterized in that** the service control right related information comprises an identifier of the service control right, and further comprises any one or more of the followings:
- valid time for interacting the service control right related information;
- base price of the service control right;
- current highest price of the service control right;
- duration of the service control right;
- beginning time and ending time of the service control right;
- round for interacting the service control right;
- introduction of the service control right.

10. A method according to any of claims 1 to 9, **characterized in that** the exclusive service control right comprises the exclusive service control right of the video collecting device of the wireless video surveillance system.

11. A method of processing interactive command in a user terminal of a communication network, comprising the following steps:
A. obtaining service control right related information and plurality of command format information from a network device;
B. editing an interactive command according to one of the plurality of command format information that is corresponding to the user terminal;
C. transmitting the interactive command to the network device.

12. A method according to claim 11, **characterized in that** the user terminal supports plurality of protocol types, and the step B further comprises the following steps:
B1. determining command format information corresponding to one of the plurality of protocols supported by the user terminal, according to a predetermined rule;
B2. editing the interactive command according to the determined command format information.

13. A method according claim 12, **characterized in that** the predetermined rule comprises any one or more of the followings:
- transmission time of the interactive command based on the protocol being shortest;
- bandwidth resource occupied by the interactive command based on the protocol being least;
- establishing speed of the interactive command based on the protocol being fast;
- user's semantics expression of the interactive command based on the protocol being most accurate, not liable to err;
- user's operation of the interactive command based on the protocol being simplest.

14. A method according to any of claims 11 to 13, **characterized in that** the method further comprises the following steps before the step A:
I. providing the network device with one or more protocol types supported by the user terminal.

15. A method according to any of claims 11 to 14, **characterized in that** the interactive command comprises a price offered by the user terminal for the service control right.

16. A method according to any of claims 12 to 15, **characterized in that** the protocol types comprise at least two of the following protocols: Open Mobile Alliance Protocol, Short Message Service Protocol, Session Initiation Protocol, Wireless Application Protocol, Hyper Text Transfer Protocol or Real-time Transport Protocol.

17. A method according to any of claims 11 to 16, **characterized in that** the service control right related information comprises an identifier of the service control right, and further comprises any one or more of the followings:
- valid time for interacting the service control right related information;
- base price of the service control right;
- current highest price of the service control right;
- duration of the service control right;
- beginning time and ending time of the service control right;
- round for interacting the service control right;
- introduction of the service control right;
- introduction of the auction method of the service control right.

18. A method according to any of claims 11 to 17, **characterized in that** the service control right comprises the control right of the wireless video surveillance system.

19. A first providing device, in a network apparatus of a wireless communication network, for providing one of one or more user terminals with an exclusive service control right, comprising:
a transmitter, configured to transmit a service control right related information and a plurality of command format information to the one or more user terminals;
a command receiver, configured to receive at least one interactive command edited according to each corresponding command format information from at least one of the one or more user terminals;
a second providing means, configured to provide one of the at least one user terminal with the exclusive service control right, according to the at least one interactive command.

20. A first providing device according to claim 19, **characterized in** further comprising:
a first determining means, configured to determine the plurality of command format information to be transmitted.

21. A first providing device according to claim 20, **characterized in that** the one or more user terminals support plurality of protocol types, the first determining means is further configured to:
determine the plurality of command format information to be transmitted corresponding to the plurality of protocol types respectively, according to the plurality of protocol types supported by the one or more user terminals.

22. A first providing device according to claim 21, **characterized in** further comprising:
a first obtaining means, configured to obtain the plurality of protocol types supported by the one or more user terminals.

23. A first providing device according to any of claims 19 to 22, wherein the second providing means further comprises:
an extracting means, configured to extract interactive information included in the at least one interactive command, according to the at least one interactive command;
the second providing means is further configured to provide one of the at least one user terminal with the service control right, according to the at least one interactive command.

24. A first providing device according to claim 23, **characterized in that** the one or more interactive information comprises a price offered by the one or more user terminals for the service control right, the second providing means is further configured to:
select and provide a user terminal who has offered the highest price for the service control right with the service control right, according to the price offered by the one or more user terminals for the service control right.

25. A first providing device according to claim 24, **characterized in that** the network apparatus has respective receiving time for receiving each interactive command from the one or more user terminals, and the second providing device is further configured to:
provide a user terminal corresponding to the interactive command received earliest by the network device with the service control right, when a plurality of user terminals have offered the same highest price for the service control right.

26. A first providing device according to any of claims 21 to 25, **characterized in that** the protocol types comprise at least two of the following protocols: Open Mobile Alliance Protocol, Short Message Service Protocol, Session Initiation Protocol, Wireless Application Protocol, Hyper Text Transfer Protocol or Real-time Transport Protocol.

27. A first providing device according to any of claims 19 to 26, **characterized in that** the service control right related information comprises an identifier of the service control right, and further comprises any one or more of the followings:
- valid time for interacting the service control right related information;
- base price of the service control right;
- current highest price of the service control right
- duration of the service control right;
- beginning time and ending time of the service control right;
- round for interacting the service control right;
- introduction of the service control right;
- introduction of the auction method of the service control right.

28. A first providing device according to any of claims 19 to 27, **characterized in that** the exclusive service control right comprises the exclusive service control right of the wireless video surveillance system.

29. A processing device for processing interactive command in a user terminal of a communication network, comprising:
a second obtaining means, configured to obtain a service control right related information and a plurality of command format information from a network device;
an editing means, configured to edit an interactive command according to one of the plurality of command format information that is corresponding to the user terminal;
an interactive command transmitting means, configured to transmit the interactive command to the network device.

30. A processing device according to claim 29, **characterized in that** the user terminal supports a plurality of protocol types, and the editing means further comprises:
a second determining means, configured to determine a command format information corresponding to one of the plurality of protocols supported by the user terminal, according to a predetermined rule;
the editing means is further configured to edit an interactive command according to the determined command format information.

31. A processing device according to claim 30, **characterized in that** the predetermined rule comprises any one or more of the followings:
- transmitting time of the interactive command based on the protocol being shortest;
- bandwidth resource occupied by the interactive command based on the protocol being least;
- establishing speed of the interactive command based on the protocol being fast.

32. A processing device according to any of claims 29 to 31, **characterized in** further comprising:
a protocol type providing means, configured to provide the network apparatus with one or more protocol types supported by the user terminal.

33. A processing device according to any of claims 29 to 32, **characterized in that** the interactive command comprises a price offered by the user terminal for the service control right.

34. A processing device according to any of claims 30 to 33, **characterized in that** the protocol types comprise at least two of the following protocols: Open Mobile Alliance Protocol, Short Message Service Protocol, Session Initiation Protocol, Wireless Application Protocol, Hyper Text Transfer Protocol or Real-time Transport Protocol.

35. A processing device according to any of claims 29 to 34, **characterized in that** the service control right related information comprises an identifier of the service control right, and further comprises any one or more of the followings:
- valid time for interacting the service control right related information;
- base price of the service control right;
- current highest price of the service control right;
- duration of the service control right;
- beginning time and ending time of the service control right;
- round for interacting the service control right;
- introduction of the service control right;
- user's semantics expression of the interactive command based on the protocol being most accurate, not liable to err;
- user's operation of the interactive command based on the protocol being simplest.

36. A processing device according to any of claims 29 to 35, **characterized in that** the service control right comprises the control right of the video collecting device of the wireless video surveillance system.

37. A network apparatus in wireless communication network, **characterized in** comprising a first providing device according to any of claims 19 to 28 for providing one of one or more user terminals with an exclusive service control right.

38. A user terminal in wireless communication network, **characterized in** comprising a processing device according to any of claims 29 to 36 for processing the interactive command.
